# EUROPÄISCHE PATENTSCHRIFT

(11) **EP 3 647 104 B1**
(45) Veröffentlichungstag und Bekanntmachung des Hinweises auf die Patenterteilung: **16.10.2024**
(21) Anmeldenummer: 18203732.5
(22) Anmeldetag: 31.10.2018
(51) Int. Cl.: B60K 15/04

(54) **TRICHTEREINSATZ FÜR EIN FÜLLROHR EINES KRAFTSTOFFTANKS**
FUNNEL INSERT FOR A FILLER PIPE OF A FUEL TANK
INSERT D'ENTONNOIR POUR UN TUYAU DE REMPLISSAGE D'UN RÉSERVOIR À CARBURANT

(43) Veröffentlichungstag der Anmeldung: 06.05.2020
(73) Patentinhaber: TI Automotive Technology Center GmbH, 76437 Rastatt (DE)
(72) Erfinder: SPRINGHOLZ, Bernhard, 76316 Malsch (DE); NICKEL, Bernd M., 76137 Karlsruhe (DE); GLADITSCH, Alexander, 77880 Sasbach (DE)
(74) Vertreter: Novagraaf Group

(56) Entgegenhaltungen:
- EP-A1- 2 719 567
- EP-A1- 2 799 273
- EP-A2- 1 541 403
- DE-A1- 102008 005 717
- US-A1- 2002 063 129
- US-A1- 2007 210 607

## Beschreibung

Die Erfindung betrifft einen Trichtereinsatz für ein Füllrohr eines Kraftstofftanks für ein Kraftfahrzeug, wobei der Trichtereinsatz in einem zur Aufnahme einer Zapfpistole bestimmten Endbereich des Füllrohrs angeordnet ist und wobei zwischen der Außenseite des Trichtereinsatzes und der Innenseite des Füllrohrs ein Freiraum besteht, in dem eine Flüssigkeitssperre angeordnet ist.

Derartige Trichtereinsätze halten und führen das Austrittsende einer Zapfpistole beim Betanken des Fahrzeugs. Am Ende eines vollständigen Betankungsvorgangs wird der Kraftstofffluss durch gegen die Zapfpistole zurückströmenden Kraftstoff abgebrochen. Um dabei zu verhindern, dass Kraftstoff an dem Trichtereinsatz außen vorbei strömt und aus dem Einfüllrohr herausspritzt, ist zwischen dem Trichtereinsatz und dem Füllrohr eine Flüssigkeitssperre angeordnet. Aus Kostengründen wird das Einfüllrohr üblicherweise aus HDPE Kunststoff mit einiger Dimensionstoleranz hergestellt, so dass eine gewisse Wandstärkenvariation auftritt, die zu einem variierenden Spaltmaß zwischen dem Trichtereinsatz und dem Einfüllrohr führt, das von der Flüssigkeitssperre aufgefangen werden muss, d.h. die Flüssigkeitssperre muss flexibel genug sein, um unterschiedliche Abstände zwischen dem Trichtereinsatz und dem Einfüllrohr zu überbrücken. Dabei ist zu berücksichtigen, dass der Trichtereinsatz im Gegensatz zu dem Einfüllrohr mit hoher Formpräzision hergestellt werden muss, da er einen mit der Zapfpistole zusammenwirkenden Fehlbetankungsschutz enthält, und daher üblicherweise aus POM oder anderen formstabilen Kunststoffen hergestellt wird, die wenig flexibel sind. Eine Dichtlippe aus formstabilem Kunststoff wie z.B. POM ist nicht in der Lage, die variierende Spaltbreite flexibel abzuschließen.

Die gattungsgemäße US 2007/210607 A1 beschreibt einen Trichtereinsatz für ein Füllrohr eines Kraftstofftanks für ein Kraftfahrzeug.

Ausgehend hiervon besteht die Aufgabe der vorliegenden Erfindung darin, einen Trichtereinsatz mit Flüssigkeitssperre derart weiterzubilden, dass Toleranzen gegenüber dem Einfüllrohr beschädigungsfrei aufgefangen werden.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Gemäß der Erfindung ist vorgesehen, dass die Flüssigkeitssperre als auf dem Außenumfang des Trichtereinsatzes angeordneter Dichtkörper ausgebildet ist, der eine umlaufende, an der Innenseite des Füllrohrs anliegende Dichtlippe aufweist und der aus einem Material mit einer höheren Flexibilität als das Material des Trichtereinsatzes besteht, wobei der Trichtereinsatz aus POM Kunststoff besteht und der Dichtkörper aus HDPE Kunststoff. Der Dichtkörper kann separat von dem Trichtereinsatz hergestellt und vor der Montage des Trichtereinsatzes in das Einfüllrohr am Trichtereinsatz angeordnet oder auch im Wege eines Zweikomponentenspritzgusses zusammen mit dem Trichtereinsatz hergestellt werden.

Der Trichtereinsatz ist aus einem formstabilen und der Dichtkörper aus einem flexiblen Kunststoff hergestellt.

Im Folgenden wird die Erfindung anhand eines in der Zeichnung in schematischer Weise dargestellten Ausführungsbeispiels näher erläutert. Es zeigt
- Fig. 1: einen Längsschnitt durch einen Endbereich eines Füllrohrs für einen Kraftstoffbehälter mit einem Trichtereinsatz zur Aufnahme eines Fehlbetankungsschutzes; und
- Fig. 2: eine perspektivische Ansicht des Trichtereinsatzes gemäß Fig. 1.

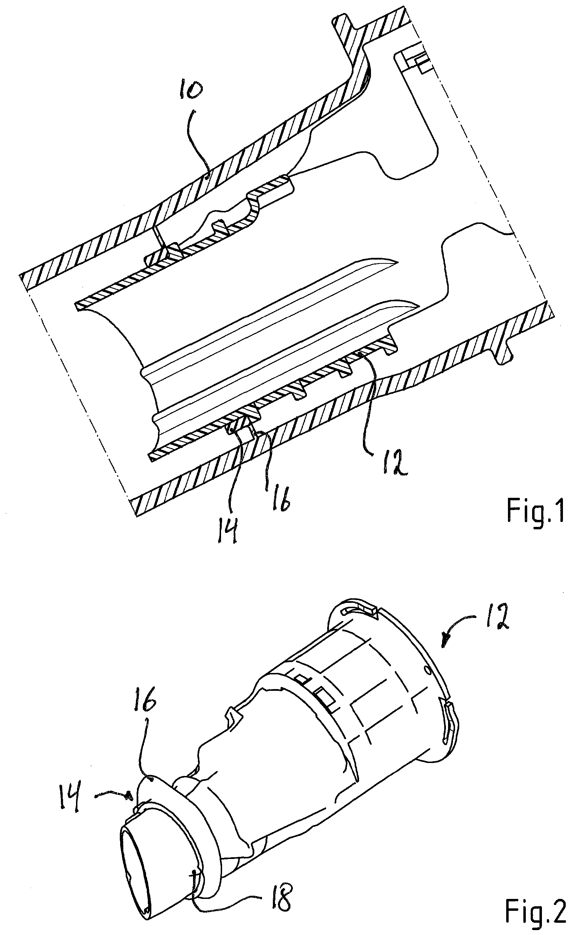

Der in Fig. 1 dargestellte einfüllseitige Endbereich eines Füllrohrs 10 aus HDPE Kunststoff weist einen Trichtereinsatz 12 (Fig. 2) aus POM Kunststoff auf, der seinerseits zur Aufnahme eines nicht näher dargestellten Funktionsbauteils bestimmt ist. Der Trichtereinsatz 12 muss wegen der Schnittstelle zu dem Funktionsbauteil mit hoher Präzision hergestellt werden, worin die Verwendung des POM Materials begründet ist. Das Füllrohr 10 hingegen ist aus dem preiswerteren Kunststoff HDPE hergestellt und kann in seinen Abmessungen, insbesondere seiner Wandstärke, aufgrund des Herstellungsverfahrens um einige Millimeter variieren. Zusätzlich kann das HDPE-Material durch Absorption von Kraftstoff und Temperaturschwankungen einer Ausdehnung oder Schrumpfung unterliegen.

Wie Fig. 1 zu entnehmen ist, ist zwischen der Außenseite des Trichtereinsatzes 12 und der Innenwandung des Füllrohrs 10 ein Ringspalt gebildet. Es soll beim Betankungsvorgang vermieden werden, dass Kraftstoff über diesen Ringspalt in Richtung der Einfüllöffnung zurückströmt, was zu einem vorzeitigen Abbruch des Betankungsvorgangs führen kann. Es ist daher auf dem Trichtereinsatz 12 ein Dichtkörper 14 mit einer Dichtlippe 16 angeordnet, die in ihrer radialen Erstreckung so bemessen ist, dass sie bereits anfänglich vorhandene oder im Betrieb auftretende Abstandsveränderungen zwischen Füllrohr 10 und Trichtereinsatz 12 zuverlässig auffängt. Hierzu ist ein Maß an Flexibilität der Dichtlippe 16 erforderlich, das durch POM Kunststoff nicht erreicht wird. Der Dichtkörper 14 ist daher aus einem Material mit größerer Flexibilität hergestellt, insbesondere aus HDPE Kunststoff.

Der Dichtkörper 14 ist in dem dargestellten Ausführungsbeispiel auf den Trichtereinsatz 12 aufgerastet, zu welchem Zweck der Trichtereinsatz 12 eine Mehrzahl von über seinen Umfang angeordnete Rastvorsprünge 18 aufweist. Alternativ kann der Dichtkörper 14 zusammen mit dem Trichtereinsatz 12 durch ein Zweikomponentenspritzgussverfahren hergestellt sein.

## Patentansprüche

1. Trichtereinsatz (12) für ein Füllrohr (10) eines Kraftstofftanks für ein Kraftfahrzeug, wobei der Trichtereinsatz (12) in einem zur Aufnahme einer Zapfpistole bestimmten Endbereich des Füllrohrs (10) angeordnet ist und wobei zwischen der Außenseite des Trichtereinsatzes (12) und der Innenseite des Füllrohrs (10) ein Freiraum besteht, in dem eine Flüssigkeitssperre angeordnet ist, **dadurch gekennzeichnet, dass** die Flüssigkeitssperre als auf dem Außenumfang des Trichtereinsatzes (12) angeordneter Dichtkörper (14) ausgebildet ist, der eine in Teilbereichen oder umlaufend an der Innenseite des Füllrohrs (10) anliegende Dichtlippe (16) aufweist und der aus einem Material mit einer höheren Flexibilität als das Material des Trichtereinsatzes (12) besteht, wobei der Trichtereinsatz (12) aus POM Material besteht und der Dichtkörper (14) aus HDPE Material.

2. Trichtereinsatz nach Anspruch 1, **dadurch gekennzeichnet, dass** der Trichtereinsatz (12) Rastvorsprünge aufweist, über die der Dichtkörper (14) auf den Trichtereinsatz (12) aufgerastet ist.

3. Trichtereinsatz nach Anspruch 1, **dadurch gekennzeichnet, dass** der Dichtkörper (14) zusammen mit dem Trichtereinsatz (12) in einem Zweikomponentenspritzgussverfahren hergestellt ist.

4. Trichtereinsatz nach Anspruch 1, **dadurch gekennzeichnet, dass** der Dichtkörper (14) mit dem Trichtereinsatz (12) verklebt, verschweißt, verklammert oder vernietet ist.

5. Trichtereinsatz nach einem der Ansprüche 1 bis 4, **dadurch gekennzeichnet, dass** der Trichtereinsatz (12) und der Dichtkörper Mittel zum Ableiten von statischer Elektrizität an das Einfüllrohr und/oder eine eingeführte Zapfpistole aufweisen.

## Claims

1. Funnel insert (12) for a filling pipe (10) of a fuel tank for a motor vehicle, the funnel insert (12) being arranged in an end region of the filling pipe (10) intended to receive a fuel nozzle, and there being a free space between the outside of the funnel insert (12) and the inside of the filling pipe (10), in which free space a liquid barrier is arranged, **characterized in that** the liquid barrier is designed as a sealing body (14) arranged on the outer circumference of the funnel insert (12), which sealing body has a sealing lip (16) that rests in partial regions or all around on the inside of the filling tube (10), and which sealing body consists of a material having a higher flexibility than the material of the funnel insert (12), the funnel insert (12) consisting of POM material and the sealing body (14) consisting of HDPE material.

2. Funnel insert according to claim 1, **characterized in that** the funnel insert (12) comprises latching projections over which the sealing body (14) is latched onto the funnel insert (12).

3. Funnel insert according to claim 1, **characterized in that** the sealing body (14) is manufactured together with the funnel insert (12) in a two-component injection molding process.

4. Funnel insert according to claim 1, **characterized in that** the sealing body (14) is adhesively bonded, welded, clamped or riveted to the funnel insert (12).

5. Funnel insert according to one of claims 1 to 4, **characterized in that** the funnel insert (12) and the sealing body comprise means for discharging static electricity to the filler pipe and/or an inserted fuel nozzle.

## Revendications

1. Insert en forme d'entonnoir (12) pour un tube de remplissage (10) d'un réservoir de carburant pour un véhicule automobile, dans lequel l'insert en forme d'entonnoir (12) est disposé dans une zone d'extrémité du tube de remplissage (10) destinée à recevoir un pistolet de distribution et dans lequel un espace libre, dans lequel est disposée une barrière contre le liquide, est présent entre le côté extérieur de l'insert en forme d'entonnoir (12) et le côté intérieur du tube de remplissage (10), **caractérisé en ce que** la barrière contre le liquide est réalisée en tant que corps d'étanchéité (14) disposé sur la périphérie extérieure de l'insert en forme d'entonnoir (12), lequel corps d'étanchéité présente une lèvre d'étanchéité (16) s'appuyant, dans des zones partielles ou sur toute la périphérie, contre le côté intérieur du tube de remplissage (10) et est constitué d'un matériau comportant une flexibilité supérieure à celle du matériau de l'insert en forme d'entonnoir (12), dans lequel l'insert en forme d'entonnoir (12) est constitué d'un matériau POM et le corps d'étanchéité (14) est constitué d'un matériau HDPE.

2. Insert en forme d'entonnoir selon la revendication 1,
**caractérisé en ce que** l'insert en forme d'entonnoir (12) présente des saillies d'encliquetage par l'intermédiaire desquelles le corps d'étanchéité (14) est encliqueté sur l'insert en forme d'entonnoir (12).

3. Insert en forme d'entonnoir selon la revendication 1,
**caractérisé en ce que** le corps d'étanchéité (14) est fabriqué conjointement avec l'insert en forme d'entonnoir (12) dans un procédé de moulage par injection à deux composants.

4. Insert en forme d'entonnoir selon la revendication 1,
**caractérisé en ce que** le corps d'étanchéité (14) est collé, soudé, agrafé ou riveté à l'insert en forme d'entonnoir (12).

5. Insert en forme d'entonnoir selon l'une des revendications 1 à 4,
**caractérisé en ce que** l'insert en forme d'entonnoir (12) et le corps d'étanchéité présentent des moyens permettant d'évacuer l'électricité statique au niveau du tube de remplissage et/ou d'un pistolet de distribution inséré.
